Europäisches Patentamt

European Patent Office

Office européen des brevets

Veröffentlichungsnummer: **0 285 974**
**A2**

## EUROPÄISCHE PATENTANMELDUNG

Anmeldenummer: 88105034.8

Int. Cl.⁴ **B32B 15/08 , B32B 31/20**

Anmeldetag: 29.03.88

Priorität: 07.04.87 DE 3711659

Veröffentlichungstag der Anmeldung:
**12.10.88 Patentblatt 88/41**

Benannte Vertragsstaaten:
**BE DE ES FR GB IT NL SE**

Anmelder: **BASF Aktiengesellschaft
Carl-Bosch-Strasse 38
D-6700 Ludwigshafen(DE)**

Erfinder: **Horn, Peter, Dr.
Neue Stuecker 15
D-6900 Heidelberg(DE)**
Erfinder: **Theysohn, Rainer, Dr.
Am Bruch 38
D-6710 Frankenthal(DE)**
Erfinder: **Baumann, Edwin
Laurentiusstrasse 11
D-6707 Schifferstadt(DE)**
Erfinder: **Betz, Walter, Dr.
Weimarer Strasse 45
D-6700 Ludwigshafen(DE)**

**Flächiger Verbundwerkstoff mit einer aluminiumhaltigen Oberflächenschicht, Verfahren zur Herstellung des flächigen Verbundwerkstoffs und dessen Verwendung.**

Flächiger Verbundwerkstoff, der aufgebaut ist aus

A. mindestens einer Oberflächenschicht aus Aluminium oder einer Aluminiumlegierung,

B. einer Kernschicht aus mit Fasermaterial verstärktem Kunststoff und

C. einem thermoplastischen Elastomeren, insbesondere einem linearen oder verzweigten Blockcopolymerisat, hergestellt durch Copolymerisation einer aromatischen Vinylverbindung und einem konjugierten Dien, als Haftkleber.

Die Verbundwerkstoffe werden vorteilhafterweise hergestellt durch Einspritzen einer thermoplastischen Kunststoffschmelze oder einer Reaktionsmischung zur Bildung eines Reaktionskunststoffs in ein geschlossenes Formwerkzeug, in das ein Fasermaterial eingelegt ist, welches mindestens einseitig mit einer mit dem thermoplastischen Elastomer als Haftkleber beschichteten Oberflächenschicht aus Aluminium oder einer Aluminiumlegierung bedeckt ist.

Die Verbundwerkstoffe eignen sich zur Herstellung von Fertigteilen mit hervorragender Oberfläche. z.B. für Verkehrsmittel.

# Flächiger Verbundwerkstoff mit einer aliminiumhaltigen Oberflächenschicht, Verfahren zur Herstellung des flächigen Verbundwerkstoffs und dessen Verwendung

Die Erfindung betrifft einen flächigen Verbundwerkstoff mit einer Kernschicht aus einem thermoplastischen Kunststoff oder einem Reaktionskunststoff, der mit einem Fasermaterial verstärkt ist, und mindestens einer Oberflächenschicht aus Aluminium oder einer Aluminiumlegierung.

Faserverbundwerkstoffe aus mit Glasmatten verstärkten Thermoplasten können, wie z.B. in Kunststoffe 66 (1976), Seiten 793 bis 797 beschrieben wird, hergestellt werden durch Tränken der Glasfasermatten mit einer Thermoplastschmelze. Das erhaltene Halbzeug wird anschließend zu Fertigteilen verpreßt, wobei die Verarbeitung z.B. nach dem Fließpreß-oder Formpreßverfahren erfolgen kann.

Nach einer anderen Verfahrensvariante zur Herstellung von flächigen Verbundwerkstoffen werden Fasermaterialien als Verstärkungsmittel in ein offenes Formwerkzeug eingelegt, das Formwerkzeug verschlossen, danach eine reaktionsfähige Mischung zur Bildung des Kunststoffs, zweckmäßigerweise mit Hilfe der Reaktionsspritzgußtechnik, abgekürzt RIM (reaction injection moulding) genannt, in das Formwerkzeug eingepreßt und aushärten gelassen. Nach dieser Methode werden z.B. gemäß DE-A-28 17 778 oder DE-A-33 25 554 flächige Verbundwerkstoffe aus verstärktem Polyamid in situ durch aktivierte alkalische Lactampolymerisation diskontinuierlich hergestellt. Man kann jedoch auch kontinuierlich auf einer Doppelbandpresse Glasmatten mit der Katalysator und Aktivator enthaltenden Lactamschmelze zusammenführen und verpressen.

Nach beiden Verfahren erhält man flächige, faserverstärkte Formteile mit hervorragenden mechanischen und thermischen Eigenschaften. Nachteilig an den auf diese Weise erhaltenen Werkstoffen ist jedoch ihre nicht ganz einwandfreie Oberfläche, da die Glasfasern so nahe an die Oberfläche vordringen, daß sich eine gewisse Rauhigkeit auf der Formteiloberfläche ausbildet.

Zur Beseitigung dieses Nachteils werden nach Angaben der DE-A-34 39 461 (US-A-4 617 225) flächige Verbundwerkstoffe aufgebaut aus einer Kernschicht aus einem textilen Fasergebilde, mindestens einer Oberflächenschicht aus einem offenzelligen Aminoplast-oder Phenoplast-Schaumstoff und einer Kunststoffmatrix aus alkalisch polymerisiertem Polyamid, welches sowohl die Kernschicht als auch die Oberflächenschicht(en) durchdringt. Die erhaltenen Produkte weisen eine glatte, faserfreie Oberfläche auf, zeigen jedoch auch eine erhöhte Wasseraufnahme, die ein Verziehen des Formteils bewirken kann, insbesondere wenn nur eine Seite der Kernschicht mit Aminoplast-oder Phenoplastschaumstoffen belegt und von der Polyamidschmelze durchdrungen wurde.

Der vorliegenden Erfindung lag die Aufgabe zugrunde, einen flächigen Verbundwerkstoff bereitzustellen auf der Grundlage eines mit Fasermaterial verstärkten Kunststoffs, vorzugsweise eines mit einem textilen Fasergebilde verstärkten thermoplastischen Kunststoffs, der eine glatte, faserfreie Oberfläche aufweist und sich insbesondere nicht verzieht.

Diese Aufgabe wird erfindungsgemäß gelöst durch die Verwendung von Aluminium oder einer Aluminiumlegierung als Deckschicht und einem speziellen thermoplastischen Elastomeren als Haftkleber zum Verbinden der Oberflächen-bzw. Deck- und Kernschicht.

Gegenstand der Erfindung ist demzufolge ein flächiger Verbundwerkstoff, der aufgebaut ist aus

A. mindestens einer Oberflächenschicht aus Aluminium oder einer Aluminiumlegierung,

B. einer Kernschicht aus mit Fasermaterial verstärktem Kunststoff und

C. einem thermoplastischen Elastomeren als Haftkleber.

Gegenstände der Erfindung sind ferner Verfahren zur Herstellung der flächigen Verbundwerkstoffe gemäß den Ansprüchen 15 bis 24 und die Verwendung der erfindungsgemäßen Verbundwerkstoffe zur Herstellung von Fertigteilen für Verkehrsmittel nach Anspruch 25.

Es war außerordentlich überraschend, daß aus diesem Verbundwerkstoff dimensionsstabile, verzugsfreie Formteile erhalten werden, insbesondere wenn die Kernschicht nur einseitig mit einer Oberflächenschicht aus Aluminium oder einer Aluminiumlegierung beschichtet wurde. Überraschend war ferner die hervorragende Haftung der Oberflächenschicht aus Aluminium oder einer aluminiumhaltigen Legierung auf der Kernschicht aus mit Fasermaterial verstärktem Kunststoff, insbesondere einem thermoplastischen Kunststoff oder Reaktionskunststoff, bei Verwendung dieser speziellen thermoplastischen Elastomeren als Haftkleber.

Die Kernschicht (B) der erfindungsgemäßen flächigen Verbundwerkstoffe besteht aus faserverstärkten Kunststoffen, wobei als Fasermaterialien organische und vorzugsweise anorganische Fasern verwendet werden. Es können Einzelfasern beliebiger Länge, z.B. von 0,1 bis 0,8 cm, vorzugsweise von 0,2 bis 0,6 cm oder Endlosfasern und Durchmessern von 1 bis 50 μm, vorzugsweise 7 bis 20 μm oder Rovings mit z.B. 40 bis 9600 tex, vorzugsweise 1200 bis 4800 tex eingesetzt werden.

die zweckmäßigerweise mit üblichen Schlichten. beispielsweise mit den in der US-A-4.358.502 beschriebenen Schlichten versehen sind.

Als Fasermaterialien vorzugsweise Verwendung finden jedoch faserige Flächengebilde. wie z.B. Matten. Vliese. Gewebe oder Filz. aus organischen oder anorganischen Fasern. Die organischen Fasern können aus natürlichen Materialien. wie z.B. Cellulose oder cellulosehaltigen Stoffen. oder Kunststoffen. wie z.B. aromatischen Polyestern. beispielsweise Polyethylen-oder Polybutylenterephthalat. Polyurethanen. Polyacrylnitrilen oder Polyamiden bestehen. Als anorganische Fasermaterialien sind Steinwolle. Asbest. Kohlenstoff oder vorzugsweise Glas geeignet. Insbesondere Anwendung finden die Glasfasermatten mit Flächengewichten von 150 bis 1200 g.m², vorzugsweise von 200 bis 950 g.m². die einzeln oder in mehreren Schichten, ungenadelt oder vorzugsweise mechanisch durch Nadeln verfestigt. wie z.B. durch Vernähen mit beispielsweise Polyesterfäden, eingesetzt werden können. Die Fasermaterialien können ferner einer Vorbehandlung mit einem wärmehärtbaren Harz entsprechend den Angaben der DE-A-36 31 282 unterworfen und bei erhöhten Temperaturen, z.B. von 60 bis 190°C verformt werden.

Die Fasermaterialien. die insbesondere aus aromatischen Polyamiden. aromatischen Polyestern. Kohlenstoff oder Glas bestehen. werden üblicherweise in einer Menge von 5 bis 75 Gew.%. vorzugsweise von 20 bis 60 Gew.%. bezogen auf das Gewicht des Kunststoffs der Kernschicht (B). eingesetzt.

Zur Herstellung der Kernschicht (B) des erfindungsgemäßen flächigen Verbundwerkstoffs eignen sich als Matrixmaterial grundsätzlich alle thermoplastisch verarbeitbaren Kunststoffe, wobei jedoch leichtfließende Thermoplaste bevorzugt eingesetzt werden. Als thermoplastisch verarbeitbare Kunststoffe seien beispielsweise genannt: Polypropylene, Polyamide, Polyalkylenterephthalate, vorzugsweise Polyethylen-und/oder Polybutylenterephthalat, Polyurethane, Polyoximethylene, z.B. Polyoximethylen-homo-und/oder -copolymerisate, Polycarbonate oder Mischungen aus mindestens zwei der thermoplastisch verarbeitbaren Kunststoffe. Sofern die Kernschicht (B) in einem separaten Verfahrensschritt vorab hergestellt wird, können die gegebenenfalls vorbehandelten Fasermaterialien. vorzugsweise die faserigen Flächengebilde und insbesondere die Glasmatten nach bekannten Methoden in die thermoplastischen Kunststoffe eingebracht werden. Beispielhaft genannt seien die Vermischung von Kurzglasfasern und Thermoplasten in einem Extruder und die anschließende Extrusion zu Halbzeugteilen oder bei Flächengebilden, vorzugsweise durch Tränken mit der Thermoplastschmelze. Geeignete Verfahren werden beispielsweise beschrieben in Kunststoffe 72 (1982). Seiten 341 ff. Kunststoffe 66 (1976). Seiten 793 ff und K. Plastic und Kautschuk Zeitung 1981, Seite 219.

Als Kunststoffe bewährt haben sich jedoch auch Reaktionskunststoffe z.B. ungesättigte Polyesterharze. Epoxidharze. Vinylesterharze. Bismaleinimide und Cyanatharze, oder vorzugsweise solche aus der Gruppe der Polyurethan-. Polyharnstoff-. Polyurethan-Polyharnstoff-Elastomeren oder insbesondere der Polyamide, wobei die Elastomeren hergestellt werden nach dem Polyisocyanatpolyadditionsverfahren und die Polyamide durch aktivierte alkalische Lactampolymerisation. Die Kernschicht (B) aus den faserigen Flächengebilden und den Reaktionskunststoffen Polyurethan-. Polyharnstoff-. Polyurethan-Polyharnstoff-Elastomeren oder -Polyamiden sowie bei einstufiger Verfahrensweise der erfindungsgemäße flächige Verbundwerkstoff oder Formteile daraus. werden zweckmäßigerweise mit Hilfe der Reaktionsspritzgußtechnik (RIM) hergestellt. Diese Verfahrenstechnik ist ebenfalls aus zahlreichen Literatur-und Patentpublikationen bekannt. Verweisen möchten wir beispielsweise auf die DE-B-26 22 951 (US-A-4 218 543). EP-A-69 286. DE-A-34 13 938. DE-A-36 31 282 und EP-A-134 992.

Die Herstellung der faserverstärkten Polyamid-Kernschicht (B) erfolgt. wie bereits dargelegt wurde. zweckmäßigerweise durch aktivierte alkalische Polymerisation von Lactamen. Diese Verfahrensweise wird beispielsweise im Kunststoff-Handbuch, Band VI, Polyamide. Carl Hanser Verlag 1966, Seiten 46 bis 49 ausführlich beschrieben. Dabei geht man von zwei Komponenten aus, wobei die eine Komponente eine Katalysator enthaltende Lactamschmelze und die andere Komponente eine Aktivator enthaltende Lactamschmelze ist. Die beiden Komponenten werden gemischt, in ein vorbehandelte Fasermaterialien enthaltendes Formwerkzeug transportiert und dort polymerisiert.

Bevorzugtes Lactam ist ε-Caprolactam, darüber hinaus können auch Pyrrolidon. Capryllactam, Laurinlactam. Önanthlactam sowie die entsprechenden C-substituierten Lactame eingesetzt werden. Die Lactame können auch modifiziert sein, beispielsweise mit Polyetherolen, polyfunktionellen Isocyanaten oder mit Bisacyl-Lactamen nach der DE-A-24 12 106.

Geeignete Katalysatoren sind z.B. Alkali-und Erdalkaliverbindungen von Lactamen, wie Natrium-ε-caprolactamat. oder von kurzkettigen aliphatischen Carbonsäuren, wie Natrium-oder Kaliumformiat, oder von Alkoholen mit 1 bis 6 Kohlenstoffatomen, wie Natriumethylat oder Kalium-tert.-butylat. Außerdem können auch Alkali-oder Erdalkalihydride, -hydroxide oder -carbonate verwendet werden sowie Grignard-Verbindungen, wie Caprolactammagnesiumbromid. Die Katalysatoren werden üblicherweise in Mengen von 0.1 bis 10 Mol.%. bezogen auf Gesamt-Lactam. eingesetzt.

Als Aktivatoren kommen in Frage: N-Acyllactame. wie N-Acetylcaprolactam. Bisacyllactame. substituierte Triazine. Carbodiimide. Ketene. Cyanamide. Mono-und Polyisocyanate. sowie maskierte Isocyanatverbindungen. Sie werden bevorzugt in Mengen von 0.1 bis 10 Mol.% eingesetzt.

Die mechanischen Eigenschaften. z.B. die Schlagzähigkeit. der Polyamid können durch übliche Zusätze. wie Polyoxialkylen-glykole mit Molekulargewichten von 2000 bis 100 000 erhöht werden. ferner durch Zusatz von reaktiven oder nicht reaktiven Kautschuken. wie z.B. Pfropfpolymerisaten. Verweisen möchten wir z.B. auf die Publikationen EP-A-00 99 058. US-A-4 590 242. EP-A-01 77 010 und DE-A-24 12 106 (GB-1 472 463).

Die Polymerisation des Lactams kann in Gegenwart üblicher Stabilisatoren durchgeführt werden. Besonders vorteilhaft ist eine Kombination von CuI und KI im Molverhältnis 1:3, die in Mengen von 50 bis 100 ppm Kupfer. bezogen auf Gesamtlactam. der aktivatorhaltigen Komponente zugesetzt wird. Weitere geeignete Stabilisatoren sind Kryptophenole. Amine sowie Triphenylphosphin.

Weitere Zusatzstoffe sind anorganische Füllstoffe und oder Verstärkungsmittel in Mengen von 1 bis 60 Gew.%. vorzugsweise 10 bis 50 Gew.%. (bezogen auf die Kernschicht), welche die Polymerisation nicht stören. z.B. Metallpulver, Quarzmehl. Metalloxide. Graphit, Ruß, Silicagel. Pigmente. Wollastonit und Kreide. Ferner können Flammschutzmittel. Kristallisationsbeschleuniger, wie z.B. Talkum oder Polyamid-2,2, Schmiermittel wie Molybdänsulfid. sowie schrumpfmindernde Substanzen zugesetzt werden. Vorzugsweise Anwendung finden Polyamidmatrizes. die schrumpfmindernde Substanzen und/oder anorganische Füllstoffe und/oder Verstärkungsmittel enthalten.

Besonders günstig erweist sich der Zusatz von Entschäumern in Mengen von 0,05 bis 5 Gew.%, vorzugsweise von 0.1 bis 1 Gew.%, welche den Einschluß von Luftblasen in der Kernschicht (B) verhindern. Bevorzugte Entschäumer sind 5 bis 20 gew.%ige Lösungen von Dienpolymeren. insbesondere Polybutadien, in organischen, insbesondere aromatischen Lösungsmitteln. Derartige Entschäumer werden von der Fa. Mallinckrodt unter der Bezeichnung ®BYK A 500 und A 501 angeboten.

Diese vorzugsweise angewandte Herstellungsmethode entspricht einer modifizierten Reaktionsspritzgußtechnik (RIM), die für Polyisocyanatpolyadditionsreaktionen z.B. von Piechota und Röhr in "Integralschaumstoffe". Carl-Hanser-Verlag 1975, Seiten 34 bis 37. sowie den vorgenannten Patentpublikationen beschrieben ist.

Die beiden Komponenten werden in Vorlagekesseln getrennt auf eine Temperatur oberhalb des Schmelzpunktes des Lactams. vorzugsweise auf 80 bis 140°C. temperiert. Mit hydraulisch angetriebenen. beheizten Tauchkolbenpumpen werden die Komponenten durch beheizte Rohre zu einem ebenfalls beheizten Mischkopf gefördert. Beim Einpressen in das Formwerkzeug wird der Räumkolben des Mischkopfes zurückgezogen und die beiden genau dosierten Komponenten treten in die geöffnete Mischkammer ein. werden dort innig vermischt und in das angeflanschte Formwerkzeug eingepreßt. Dies geschieht im allgemeinen unter einem Druck von mehr als 1 bar. vorzugsweise von 1,1 bis 300 bar und insbesondere bei 2 bis 80 bar. Grundsätzlich ist es aber auch möglich. drucklos zu arbeiten. wenn man durch Verwendung spezieller Apparaturen dafür sorgt. daß die Schmelze genügend rasch in das Formwerkzeug einfließt. Innerhalb von 2 bis 50 sec. vorzugsweise von 3 bis 20 sec. ist die Lactam-Schmelze vollständig von dem Mischkopf in die Form überführt. Eine Stickstoffspülung der Form ist nicht erforderlich.

Das Formwerkzeug wird zweckmäßigerweise auf eine Temperatur von 100 bis 180°C. vorzugsweise auf 125 bis 160°C und insbesondere auf 130 bis 150°C vorgeheizt. Da das faserige Flächengebilde bereits vorher in das Formwerkzeug eingelegt wird. hat auch dieses die Formtemperatur angenommen. Die Lactam-Schmelze erwärmt sich in dem Formwerkzeug rasch auf deren Temperatur und polymerisiert dabei innerhalb eines Zeitraums von weniger als 3 min. Im allgemeinen kann die fertige Kernschicht (B) bereits nach 1 bis 2 min aus dem Formwerkzeug entnommen werden. Bei einer Polymerisationstemperatur zwischen 120 und 180°C entsteht ein hochmolekulares Polyamid mit einem K-Wert (nach Fikentscher. Cellulosechemie 13, (1932), S. 58) von mehr als 100. vorzugsweise von 110 bis 160. dessen Gehalt an Monomeren und Oligomeren unter 3 %, vorzugsweise unter 2 % liegt. Der K-Wert kann durch Zusatz bekannter Regler, z.B. langkettiger aliphatischer Monoamine, wie Stearylamin, oder Vernetzer, wie z.B. Methylenbiscaprolactam oder isocyanuratisiertes Hexamethylendiisoccyanat, gesteuert werden.

Nach der beschriebenen Methode kann man großflächige Kernschichten (B). beispielsweise Platten mit einer Dicke von ungefähr 0.5 bis ungefähr 20 mm und größer, insbesondere von 1 bis 10 mm auf relativ einfache Weise herstellen.

Die erfindungsgemäßen flächigen Verbundwerkstoffe weisen mindestens eine Oberflächenschicht (A) aus Aluminium oder vorzugsweise einer Aluminiumlegierung auf. Es ist jedoch auch möglich in einem Arbeitsgang Formkörper aus einem Verbundwerkstoff mit dem erfindungsgemäßen Aufbau herzustellen. die allseitig, d.h. an allen 6 Seitenflächen die Oberflächenschicht (A) aufweisen. Bei Herstellung des erfindungsgemäßen flächigen Verbundwerkstoffs wird dieser vorteilhafterweise zweiseitig oder insbesondere einseitig, d.h. an der großflächigen Grund-und oder Oberseite. mit einer Oberflächenschicht (A) aus Aluminium oder einer Aluminiumlegierung versehen. Zur Erzielung eines festen Verbunds zwischen Kern-und Oberflächenschicht bei Verwendung der vorzugsweise zur Anwendung kommenden Aluminiumlegierungen in Verbindung mit dem thermoplastischen Elastomeren als Haftkleber. ist es zweckmäßig, wenn die Aluminiumlegierung zu mindestens 80 Gew.%. bezogen auf das Gesamtgewicht. aus Aluminium besteht. Besonders bewährt haben sich Oberflächenschichten (A) aus Aluminiumlegierungen. die im wesentlichen bestehen aus Aluminium als Hauptbestandteil. Magnesium und Silicium. Zur Bildung der Oberflächenschicht (A) die zweckmäßigerweise eine Dicke von 0.001 bis 1 mm. vorzugsweise von 0.2 bis 0,8 mm besitzt, werden das Aluminium oder die -legierung üblicherweise in Form von Folien oder dünnen Blechen verarbeitet.

Zur Erzielung eines festen Verbunds zwischen der aluminiumhaltigen Oberflächenschicht (A) und der mit Fasermaterial verstärkten Kernschicht (B) werden erfindungsgemäß thermoplastische Elastomere als Haftkleber (C) verwendet, die vorzugsweise keine festigkeitshemmende Zusatzstoffe enthalten. Als thermoplastische Elastomere bewährt haben sich lineare oder verzweigte Blockcopolymerisate, die hergestellt werden durch Copolymerisation einer aromatischen Vinylverbindung und eines konjugierten Diens. Blockcopolymerisate der genannten Art und Verfahren zu deren Herstellung werden beispielsweise beschrieben in der DE-A-31 05 329 (GB 20 69 510). DE-B-15 95 296 (GB 11 30 770) und DE-C-21 25 344 (GB 13 12 854). Die als Haftkleber (C) geeigneten Blockcopolymerisate werden vorzugsweise gelöst in einem aromatischen Kohlenwasserstoff in einer solchen Menge auf die Oberflächenschicht (A) aufgetragen, daß nach Verdunsten des Lösungsmittels ein im wesentlichen blasenfreier Haftkleberfilm mit einer Schichtdicke von 10 bis 200 μm, vorzugsweise 20 bis 100 μm entsteht.

Die erfindungsgemäßen flächigen Verbundwerkstoffe können nach verschiedenen Verfahrensvarianten hergestellt werden. Wird z.B. die Kernschicht (B). wie oben ausgeführt wurde, in einem separaten Verfahrensschritt. z.B. durch Tränken des Fasermaterials mit einer thermoplastischen Kunststoffschmelze oder mittels der RIM-Technik in einem geschlossenen Formwerkzeug hergestellt, so findet zur Herstellung der erfindungsgemäßen flächigen Verbundwerkstoffe zweckmäßigerweise folgendes Verfahren Anwendung:

In ein offenes. vorzugsweise temperiertes Formwerkzeug aus zweckmäßigerweise einem metallischen Werkstoff werden eine oder mehrere. auf einer Seite mit dem thermoplastischen Elastomeren als Haftkleber (C) beschichtete Oberflächenschichten (A) aus Aluminium oder vorzugsweise einer Aluminiumlegierung so in das Formwerkzeug eingelegt, daß die haftkleberfreie Seite an der inneren Formwerkzeugoberfläche anliegt. Die Haftkleber aufweisende Seite einer dieser Oberflächenschichten (A) wird nun mit der Kernschicht (B) aus mit Fasermaterial verstärktem thermoplastischen Kunststoff oder Reaktionskunststoff. insbesondere Polyamid, belegt, das Formwerkzeug verschlossen und die Oberflächenschicht(en) (A) und die Kernschicht (B) bei einer Temperatur von 20 bis 100°C. vorzugsweise 50 bis 80°C gegebenenfalls unter Druck, zweckmäßigerweise unter Anwendung eines Flächenpreßdrucks von 10 bis 300 kN·m², insbesondere von 100 bis 200 kN·m². verklebt.

Nach den vorzugsweise zur Anwendung kommenden Verfahren wird die Kernschicht (B) und der erfindungsgemäße flächige Verbundwerkstoff in einem Arbeitsgang hergestellt. Analog der oben beschriebenen Methode werden auch bei dieser Verfahrensvariante in ein offenes. vorzugsweise temperiertes. metallisches Formwerkzeug eine oder mehrere. auf einer Seite mit dem thermoplastischen Elastomeren als Haftkleber (C) beschichtete Oberflächenschichten (A) aus Aluminium oder vorzugsweise einer Aluminiumlegierung so in das Formwerkzeug eingelegt. daß die haftkleberhaltige Seite an der der inneren Formwerkzeugoberfläche abgewandten Seite zu liegen kommt. Die haftkleberhaltige Seite einer dieser Oberflächenschichten (A) wird nun mit einer Schicht aus Fasermaterial zur Bildung der Kernschicht belegt und das Formwerkzeug verschlossen. Sobald die Oberflächenschicht(en) und das Fasermaterial in etwa die Formwerkzeugtemperatur aufweisen, wird die thermoplastische Kunststoffschmelze oder die Reaktionsmischung zur Bildung des Reaktionskunststoffs, vorzugsweise mittels der RIM-Technik, in den mit Fasermaterial belegten Hohlraum zwischen den Oberflächenschichten (A) oder einer Oberflächenschicht (A) und der Formwerkzeuginnenfläche eingespritzt. Die Bildung und Aushärtung der Kernschicht (B) und die Verklebung mit der oder den Oberflächenschicht(en) erfolgt gleichzeitig und ist, in Abhängigkeit von dem eingesetzten Thermoplasten oder dem Reaktionskunststoff sowie der Formwerkzeugtemperatur innerhalb eines Zeitraumes von 30 bis 360 Sekunden, vorzugsweise 30 bis 180 Sekunden beendet. Im allgemeinen kann der erhaltene Verbundwerkstoff bereits 1 bis 2 Minuten nach beendeter Reaktion entformt werden. Die zweckmäßigerweise angewandte Formwerkzeugtemperatur beträgt in Abhängigkeit vom eingesetzten Kunststoff ungefähr 20 bis 280°C. wobei bei Reaktionskunststoffen auf Polyisocyanatbasis vorzugsweise Temperaturen von 20 bis 80°C. insbesondere 40 bis 60°C. bei Polyamiden. hergestellt nach der alkalischen Lactampolymerisation. vorzugsweise von 100 bis 180°C. insbesondere von 125 bis 160°C und bei Thermoplasten vorzugsweise von 180 bis 280°C. insbesondere von 200 bis 280°C angewandt werden. Auch bei dieser Verfahrensweise kann die Verklebung der Oberflächenschicht(en) und Kernschicht gegebenenfalls unter zusätzlicher Anwendung von Druck durchgeführt werden. wobei die Flächenpreßdrucke vorteilhafterweise 10 bis 300 kN/m². vorzugsweise von 100 bis 200 kN/m² betragen.

Werden die erfindungsgemäßen flächigen Verbundwerstoffe einstufig unter Verwendung einer in situ nach der aktivierten alkalischen Lactampolymerisation erhaltenen faserverstärkten Kernschicht (B) aus Polyamid hergestellt. so wird im wesentlichen analog der zuletzt beschriebenen Herstellungsmethode verfahren. Bei dieser speziellen Verfahrensweise wird. zweckmäßigerweise nach der RIM-Technik. eine Katalysator und Aktivator enthaltende Lactamschmelze zur Bildung der Kernschicht in das Formwerkzeug eingespritzt. das zur raschen Polymerisation des Lactams. wie bereits dargelegt wurde. eine Temperatur von 100 bis 180°C. insbesondere von 125 bis 160°C besitzt. Gegebenenfalls kann auch bei dieser Verfahrensweise. insbesondere bei Beginn der Polyamidkristallisation ein Flächenpreßdruck von 10 bis 300 kN/m². vorzugsweise von 100 bis 200 kN/m² ausgeübt werden.

Die erfindungsgemäßen flächigen Verbundwerkstoffe besitzen beispielsweise eine Dicke von ungefähr 0,5 bis 40 mm. vorzugsweise ungefähr 0,5 bis 22 mm. wobei zweckmäßigerweise die Oberflächenschicht (A) eine Dicke von 0,001 bis 1 mm und die Kernschicht (B) eine Dicke von 0,5 bis 20 mm aufweist. Die Produkte zeichnen sich durch gute mechanische Eigenschaften und eine hervorragende Oberfläche aus. Sie eignen sich zur Verwendung als Formkörper oder insbesondere zur Herstellung von Fertigteilen für Verkehrsmittel. z.B. für Schienen-. Kraftfahrzeuge oder Flugzeuge. beispielsweise für Karosserieteile. sowie für technische Gehäuse.

Beispiel 1

Herstellung eines Verbundwerkstoffs mit einer Kernschicht aus alkalisch polymerisiertem Polyamid unter Anwendung der RIM-Technik.

Rezeptur der Komponente I: Mischung aus

42 g Caprolactam und
8.0 g einer 17.5 gew.%igen Lösung von Natriumlactam in Caprolactam

Rezeptur der Komponente II: Mischung aus

41.25 g Caprolactam und
8.5 g einer Lösung aus 83.5 Gew.% Caprolactam und 16.5 Gew.% Hexamethylen-diisocyanat.

Die Komponente I wurde auf 120°C. die Komponente II auf 110°C vorgeheizt. Die Komponenten I und II wurden in einem selbstreinigenden Mischkopf mit Räumkolben. hergestellt von der Firma Elastogran Maschinenbau GmbH. Straßlach bei München. im Gewichtsverhältnis 1:1 gemischt.

In ein Formwerkzeug aus Stahl mit den Innenabmessungen 700 × 300 × 2.5 mm wurde als Oberflächenschicht ein 0.5 mm dickes Blech aus einer Aluminiumlegierung auf der Grundlage von Aluminium (85 Gew.%). Magnesium und Silicium eingelegt. welches auf der der Formwerkzeuginnenfläche abgewandten Seite mit einer 100 μm dicken Blockcopolymerisatschicht auf Basis einer aromatischen Vinylverbindung und eines konjugierten Diens (Tufprene®A der Firma Asahi Chemical Ind.. Co.. Japan) als Haftkleber versehen war. eingelegt. Auf das haftkleberhaltige Blech wurde eine Glasmatte mit einem Flächengewicht von 900 g/m² gelegt und das Formwerkzeug geschlossen. Formwerkzeug. Blech und Glasmatte wurde auf 150°C erhitzt. innerhalb von 7 Sekunden das Gemisch aus den Komponenten I und II über den Mischkopf mit einem Druck von 40 bar in den verbleibenden Formwerkzeughohlraum eingespritzt und das Caprolactam in ungefähr 60 Sekunden polymerisiert. Der fertige Verbundwerkstoff konnte nach 90 Sekunden entformt werden.

Der erhaltene Verbundwerkstoff. an dem die folgenden mechanischen Eigenschaften gemessen wurde. besaß eine spiegelglatte Oberfläche und zeigte keine Verzugserscheinungen.
Zugfestigkeit nach DIN 53 455 [N/mm²]:132
Streckspannung nach DIN 53 455 [N/mm²]: 158
Reißdehnung nach DIN 53 455 [%]: 2.16
Zug-E-Modul nach DIN 53 452 [N/mm²]: 17 958
Grenzbiegespannung nach DIN 53 452 [N/mm²]: 172

Plastechontest nach DIN 53 443 zur Aluminiumlegierungsseite Schädigungsarbeit:

bei +23°C    [Nm]:16.2
bei -40°C    [Nm]: 24

Durchstoßarbeit:

bei +23°C    [Nm]: 37.1
bei -40°C    [Nm]: 40.3

Schädigungskraft:

bei +23°C    [N]: 4813
bei -40°C    [N]: 5692

Schädigungsverformung:

bei +23°C    [mm]:6.2
bei -40°C    [mm]:7.42


Plastchontest nach DIN 53 443 zur Polyamidseite Schädigungsarbeit:

bei +23°C    [Nm]: 10.43
bei -40°C    [Nm] 4.56

Durchstoßarbeit:

bei +23°C    [Nm]: 27,8
bei -40°C    [Nm]: 29,9

Schädigungskraft:

bei +23°C    [N]: 4539
bei -40°C    [N]: 4609

Schädigungsverformung:

bei +23°C    [mm]: 4,72
bei -40°C    [mm]: 4,56


Die Haftung zwischen der Oberflächenschicht aus der Aluminiumlegierung und der Kernschicht aus mit Glasmatten verstärktem Polyamid, ermittelt mit dem Rollenschälversuch nach DIN 53 289, betrug 2,27 [N/mm].


Beispiel 2

Eine glasmattenverstärkte Polyamidplatte aus Polyamid 6 mit einem Glasgehalt von 30 Gew.%, hergestellt durch Tränken der Glasmatte mit der Polyamidschmelze, wurde in einem mit IR-Strahler beheizten Ofen auf 270°C erhitzt und in ein auf 50°C temperiertes, metallisches Formwerkzeug, das ein mit einem Blockcopolymerisat aus einer aromatischen Vinylverbindung und einem konjugierten Dien (Tufprene®A, der Firma Asahi Chemical Ind. K.K.) beschichtetes Aluminiumblech enthielt, eingebracht. Das Formwerkzeug wurde geschlossen und die Polyamidplatte und das Aluminiumblech unter einem Flächenpreßdruck von 200 kN/m² verklebt. Das erhaltene Verbundelement besaß eine ausgezeichnete Oberfläche.


## Ansprüche

1. Flächiger Verbundwerkstoff, aufgebaut aus

A. mindestens einer Oberflächenschicht aus Aluminium oder einer Aluminiumlegierung,

B. einer Kernschicht aus mit Fasermaterial verstärktem Kunststoff und

C. einem thermoplastischen Elastomeren als Haftkleber.

2. Flächiger Verbundwerkstoff nach Anspruch 1, dadurch gekennzeichnet, daß die Oberflächenschicht (A) aus einer Aluminiumlegierung mit einem Aluminiumgehalt von mindestens 80 Gew.% besteht.

3. Flächiger Verbundwerkstoff nach Anspruch 1, dadurch gekennzeichnet, daß die Oberflächenschicht (A) eine Aluminiumlegierung ist, die im wesentlichen besteht aus Aluminium als Hauptbestandteil, Magnesium und Silicium.

4. Flächiger Verbundwerkstoff nach Anspruch 1, dadurch gekennzeichnet, daß man als Fasermaterial zur Verstärkung der Kernschicht (B) organische oder anorganische Fasern oder flächige Fasergebilde aus solchen Fasern verwendet.

5. Flächiger Verbundwerkstoff nach Anspruch 1, dadurch gekennzeichnet, daß das Fasermaterial zur Verstärkung der Kernschicht (B) aus Glas, Kohlenstoff, aromatischen Polyamiden oder aromatischen Polyestern besteht.

6. Flächiger Verbundwerkstoff nach Anspruch 1, dadurch gekennzeichnet, daß der Kunststoff zur Bildung der Kernschicht (B) thermoplastisch verarbeitbar ist.

7. Flächiger Verbundwerkstoff nach Anspruch 1, dadurch gekennzeichnet, daß man als Kunststoff für die Kernschicht (B) thermoplastisch verarbeitbare Polypropylene, Polyamide, Polyalkylenterephthalate, vorzugsweise Polyethylen-und/oder Polybutylenterephthalat, Polyurethane, Polyoximethylene und/oder Polycarbonate verwendet.

8. Flächiger Verbundwerstoff nach Anspruch 1. dadurch gekennzeichnet. daß man zur Herstellung der Kernschicht (B) die gegebenenfalls vorbehandelte Fasermaterialien mit einer Schmelze aus thermoplastischen Kunststoffen tränkt.

9. Flächiger Verbundwerkstoff nach Anspruch 1. dadurch gekennzeichnet. daß man als Kunststoff zur Bildung der Kernschicht (B) einen Reaktionskunststoff aus der Gruppe der Polyurethan-. Polyharnstoff-oder Polyurethan-Polyharnstoff-Elastomeren oder vorzugsweise der Polyamide verwendet.

10. Flächiger Verbundwerkstoff nach Anspruch 1. dadurch gekennzeichnet. daß das Polyamid für die Kernschicht (B) hergestellt wird durch aktivierte alkalische Lactampolymerisation.

11. Flächiger Verbundwerkstoff nach Anspruch 1. dadurch gekennzeichnet. daß die Kernschicht (B) einen Gehalt an Fasermaterial von 5 bis 75 Gew.%. bezogen auf das Gewicht des Kunststoffs der Kernschicht (B). aufweist.

12. Flächiger Verbundwerkstoff nach Anspruch 1. dadurch gekennzeichnet. daß man als Haftkleber (C) ein thermoplastisches Elastomer aus der Gruppe der linearen oder verzweigten Blockcopolymerisate. hergestellt durch Copolymerisation einer aromatischen Vinylverbindung und einem konjugierten Dien. verwendet.

13. Flächiger Verbundwerkstoff nach Anspruch 1. dadurch gekennzeichnet. daß das als Haftkleber verwendete thermoplastische Elastomer keine festigkeitshemmende Zusatzstoffe enthält.

14. Flächiger Verbundwerkstoff nach Anspruch 1, dadurch gekennzeichnet. daß die Oberflächenschicht (A) 0,001 bis 1 mm und die Kernschicht (B) 0,5 bis 20 mm dick sind.

15. Verfahren zur Herstellung eines flächigen Verbundwerkstoffs, aufgebaut aus

A. mindestens einer Oberflächenschicht aus Aluminium oder einer Aluminiumlegierung,

B. einer Kernschicht aus mit Fasermaterial verstärktem Kunststoff und

C. einem thermoplastischen Elastomeren als Haftkleber, dadurch gekennzeichnet, daß man

a) in ein offenes Formwerkzeug mindestens eine Oberflächenschicht (A) aus Aluminium oder vorzugsweise einer Aluminiumlegierung einlegt, die an der der inneren Formwerkzeugoberfläche abgewandten Seite mit einem thermoplastischen Elastomer als Haftkleber (C) beschichtet ist.

b) die Oberflächenschicht mit einer Kernschicht (B) aus mit Fasermaterial verstärktem thermoplastischen Kunststoff oder Reaktionskunststoff belegt,

c) das Formwerkzeug verschließt und

d) die Oberflächen-und Kernschicht bei einer Temperatur von 20 bis 280°C verklebt.

16. Verfahren nach Anspruch 15. dadurch gekennzeichnet. daß man die Oberflächen-und Kernschicht unter einem Flächenpreßdruck von 10 bis 300 kN m² verklebt.

17. Verfahren zur Herstellung eines flächigen Verbundwerkstoffs, aufgebaut aus

A. mindestens einer Oberflächenschicht aus Aluminium oder einer Aluminiumlegierung,

B. einer Kernschicht aus mit Fasermaterial verstärktem Kunststoff und

C. einem thermoplastischen Elastomeren als Haftkleber. dadurch gekennzeichnet. daß man

a) in ein offenes Formwerkzeug mindestens eine Oberflächenschicht (A) aus Aluminium oder vorzugsweise einer Aluminiumlegierung einlegt. die an der der inneren Formwerkzeugoberfläche abgewandten Seite mit einem thermoplastischen Elastomer als Haftkleber (C) beschichtet ist.

b) die Oberflächenschicht mit einer Schicht aus Fasermaterial zur Bildung der Kernschicht (B) belegt,

c) das Formwerkzeug verschließt,

d) zur Einbettung des Fasermaterials eine Reaktionsmischung zur Bildung des Reaktionskunststoffs in das Fasermaterial einspritzt und

e) die gebildete Kernschicht aushärten läßt unter gleichzeitiger Verklebung mit der Oberflächenschicht.

18. Verfahren nach Anspruch 17. dadurch gekennzeichnet. daß das Formwerkzeug eine Temperatur von 20 bis 280°C aufweist.

19. Verfahren nach Anspruch 17. dadurch gekennzeichnet. daß die Verklebung der Oberflächen-und Kernschicht unter einem Flächenpreßdruck von 10 bis 300 kN,m² durchgeführt wird.

20. Verfahren zur Herstellung eines flächigen Verbundwerkstoffs, aufgebaut aus

A. mindestens einer Oberflächenschicht aus Aluminium oder einer Aluminiumlegierung,

B. einer Kernschicht aus mit Fasermaterial verstärktem Kunststoff und

C. einem thermoplastischen Elastomeren als Haftkleber, dadurch gekennzeichnet, daß man

a) in ein offenes Formwerkzeug mindestens eine Oberflächenschicht (A) aus Aluminium oder vorzugsweise einer Aluminiumlegierung einlegt, die an der der inneren Formwerkzeugoberfläche abgewandten Seite mit einem thermoplastischen Elastomer als Haftkleber (C) beschichtet ist,

b) die Oberflächenschicht mit einer Schicht aus Fasermaterial zur Bildung der Kernschicht (B) belegt,

c) das Formwerkzeug verschließt und

d) zur Einbettung des Fasermaterials und Bildung der Kernschicht (B) eine Katalysator und Aktivator enthaltende Lactamschmelze einspritzt und

e) das Lactam bei einer Temperatur von 120 bis 180°C polymerisiert.

21. Verfahren nach Anspruch 20. dadurch gekennzeichnet. daß bei Kristallisationsbeginn des Polyamids ein Flächenpreßdruck von 10 bis 300 kN m² ausgeübt wird.

22. Verfahren nach Anspruch 20. dadurch gekennzeichnet. daß die Polyamidmatrix - schrumpfmindernde Substanzen und oder anorganische Füll-und oder Verstärkungsmittel enthält.

23. Verfahren nach den Ansprüchen 15. 17 oder 20. dadurch gekennzeichnet, daß man als Haftkleber (C) ein thermoplastisches Elastomer aus der Gruppe der linearen oder verzweigten Blockcopolymerisate. hergestellt durch Copolymerisation einer aromatischen Vinylverbindung und einem konjugierten Dien. verwendet.

24. Verfahren nach den Ansprüchen 15. 17 oder 20. dadurch gekennzeichnet. daß man den Haftkleber (C) in einer 10 bis 200 µm dicken Schicht auf die Oberflächenschicht (A) aus Aluminium oder einer Aluminiumlegierung aufträgt.

25. Verwendung der flächigen Verbundwerkstoffe nach Anspruch 1 zur Herstellung von Fertigteilen für Verkehrsmittel.